Europäisches Patentamt

European Patent Office

Office européen des brevets

(11) Publication number: **0 139 402**
**B1**

(12) **EUROPEAN PATENT SPECIFICATION**

(45) Date of publication of patent specification: **18.05.88**    (51) Int. Cl.⁴: **G 03 B 21/64**

(21) Application number: **84305776.1**

(22) Date of filing: **23.08.84**

(54) Stereoscopic projection.

(30) Priority: **06.09.83 GB 8323855**

(43) Date of publication of application:
**02.05.85 Bulletin 85/18**

(45) Publication of the grant of the patent:
**18.05.88 Bulletin 88/20**

(84) Designated Contracting States:
**AT BE CH DE FR GB IT LI LU NL SE**

(56) References cited:
**US-A-1 309 183**
**US-A-2 216 960**
**US-A-3 191 493**

(73) Proprietor: **KARRAN PRODUCTS LIMITED**
**Karran House Lightwater Road**
**Lightwater Surrey GU18 5XQ (GB)**

(72) Inventor: **Woodroofe, David Kenneth**
**Topwood Tilmore Gardens**
**Petersfield Hampshire GU32 2JH (GB)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

# Description

This invention relates to photographic transparencies for the projection of stereoscopic images.

It is known to provide photographic transparency which comprises a piece of polarising film bearing one image and bonded thereto a further piece of oppositely polarised film bearing a slightly different image. When projected onto a screen and viewed through spectacles or the like having oppositely polarised eye pieces a stereoscopic image can be obtained. A disadvantage of such transparencies is that a special processing step is required in making the transparencies to transfer the images from normal photographic film onto polarising film. It is known to transfer the images using a dye-transfer technique.

It is also known from US-A-3191493 to provide stereoscopic images using a pair of non-polarising transparencies and projecting them through separate projection paths, each fitted with a polarising filter. A disadvantage of such a system is that the projector must be adapted to receive the separate polarising filters. Furthermore, when giving a slide show, if 2-D transparencies are included amongst the pairs of stereoscopic transparencies and projected through one or other of the two projectors, the viewer will see the 2-D images through only one eye unless the spectacles are removed.

The projected image is viewed through a pair of spectacles or the like having a pair of polarising eye pieces with the directions of polarisation at right angles to each other and corresponding to the directions of polarisation of the polarising film of the transparencies.

The transparencies according to the invention have the following advantages: the images are formed in a standard manner on normal photographic film rather than by using special processing techniques to form the images on a special film; the transparencies do not require a special projector, but may be projected by a pair of simple projectors; the transparencies of each pair may be projected by either projector; and a slide show may include pairs of transparencies according to the invention interspersed with single 2-D transparencies which are projected through one of the projectors without the need for viewer to remove his or her stereoscopic spectacles.

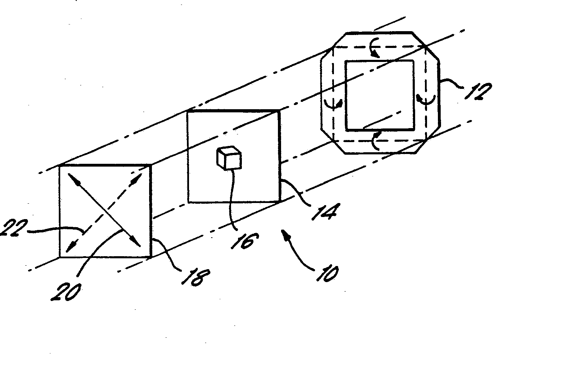

A specific embodiment of the invention will now be described by way of example with reference to the accompanying drawing which is an exploded view of one of a pair of transparencies according to the invention.

Referring to the drawings one transparency 10 of a pair comprises a mount 12 on which are mounted a piece of non-polarising photographic film 14 on which is formed an image 16 of an object and piece of uniform light polarising film 18. The polarising film may be bonded to the photographic film, for example by an adhesive. The direction of polarisation of the film is diagonally across the film as indicated by the line and arrows 20.

The other transparency of the pair is similar to the transparency 10 with two exceptions. Firstly the image is produced by photographing the object at a slightly different angle to that used for the first transparency. Secondly, the direction of polarisation of the polarising film of the other transparency is at right angles to polarisation direction of the first transparency, as indicated by the dotted line and arrows 22 in the drawing.

Mounts may be used which have projections to engage in sprocket holes along the edge of the photographic film to ensure that the photographic film is correctly located in the mount.

## Claims

1. A pair of photographic transparencies for stereoscopic projection, each transparency (10) comprising a mount (12) containing a photographic film (14) on which is formed an image (16) representing the same object viewed at slightly different angles, characterised in that an overlay of polarising film and (18) is also provided in each mount (12) extending over and lying against the film therein, the polarising property of said polarising film (18) being uniform across the film and the directions of polarisation (20, 22) of the overlays of the respective transparencies being substantially at right angles to each other when the transparencies are arranged for projection.

2. A pair of transparencies as claimed in Claim 1, wherein each overlay (18) is bonded to the respective photographic film (14).

## Patentansprüche

1. Ein Paar von fotografischen Dias für Stereoprojektion, wobei jedes Dia (10) eine Fassung (12) aufweist, die einen fotografischen Film (14) hält, auf dem ein Bild (16) ausgebildet ist, das den gleichen Gegenstand unter geringfügig verschiedenen Winkel gesehen darstellt, dadurch gekennzeichnet, daß in jeder Fassung (12) ferner eine Auflage (18) aus polarisierender Folie vorgesehen ist, die sich über das darin gehaltene Dia erstreckt und gegen dieses anliegt, wobei die Polarisierungseigenschaften der polarisierenden Folie (18) über die Fläche dieser Folie gleichförmig sind und die Polarisierungsrichtungen (20, 22) der jeweiligen Auflagen der beiden Dias, wenn diese in Projektionsstellung angeordnet sind, im wesentlichen rechtwinklig zueinander stehen.

2. Ein paar von Dias nach Anspruch 1, dadurch gekennzeichnet, daß jede Auflage (18) mit dem zugehörigen fotografischen Film (14) verbunden ist.

## Revendications

1. Une paire de positifs transparents photographiques pour projection stéréoscopique, chaque positif transparent (10) comprenant un support (12) comportant un film photographique (14) sur lequel est formée une image (16) qui représente le même objet vu sous deux angles légèrement différents, caractérisée en ce qu'une surcouche de film polarisant (18) est prévue dans chaque support (12) et s'étend au-dessus du film en s'appuyant sur celui-ci, le caractère polarisant dudit film polarisant (18) étant homogène en travers de celui-ci et les sens de polarisations (20, 22) de la surcouche du positif transparent respectif étant sensiblement perpendiculaires l'un par rapport à l'autre lorsque les positifs transparents (10) sont disposés pour leur projection.

2. Une paire de positifs transparents selon la revendication 1, dans laquelle chaque surcouche (18) adhère au film photographique (14) respectif.